# EUROPEAN PATENT APPLICATION

(11) **EP 4 530 844 A1**
(43) Date of publication of application: **02.04.2025**
(21) Application number: 24191943.0
(22) Date of filing: 31.07.2024
(51) Int. Cl.: G06F 9/50

(54) **USER AND/OR SOFTWARE DEFINED ENERGY CONSUMPTION CONTROL**

(30) Priority: 29.09.2023 US 202318375034
(71) Applicant: INTEL Corporation, Santa Clara, CA 95054 (US)
(72) Inventor: THYAGATURU, Akhilesh S., Santa Clara, 95054 (US); GUIM BERNAT, Francesc, Santa Clara, 95054 (US); CONNOR, Patrick, Santa Clara, 95054 (US); GOPAL, Vinodh, Santa Clara, 95054 (US); GARG, Mohit Kumar, Santa Clara, 95054 (US)
(74) Representative: Rummler, Felix

(57) **Abstract**

A method is described. The method includes receiving a request. The method includes allocating and/or configuring hardware to execute the request in accordance with an energy related input specified by a sender of the request. The method includes causing execution of the request in accordance with the energy related input.

## Description

### BACKGROUND

As cloud providing services are becoming more prevalent, service providers are seeking new ways to manage the energy consumed by their respective networks and data centers.

### BRIEF DESCRIPTION OF THE FIGURES

Fig. 1 shows a data center and network that provides and delivers services to an end user and consumes energy in accordance with energy consumption configuration information specified by the end user;
Fig. 2a shows a data center capable of providing services for a user that consume energy in accordance with energy consumption configuration information specified by the end user;
Fig. 2b shows a data center process for servicing a user request in which the process's sub-methods are selected to keep within an energy budget specified by the user;
Figs. 3a and 3b show network routers/switches capable of delivering services to a user that consume energy in accordance with energy consumption configuration information specified by the end user;
Fig. 4 shows a data center capable of providing services for a user that consume energy sourced by one or more energy sources in accordance with energy source configuration information specified by the end user;
Fig. 5 shows execution of an application whose supporting hardware components have energy consumption configurations established in software;
Fig. 6 shows execution of a plurality of applications whose supporting hardware components have energy consumption configurations established in software;
Fig. 7 shows a data center software stack;
Fig. 8 shows a data center;
Figs. 9a and 9b show an IPU.

### DETAILED DESCRIPTION

### "End-to-end" user defined energy consumption

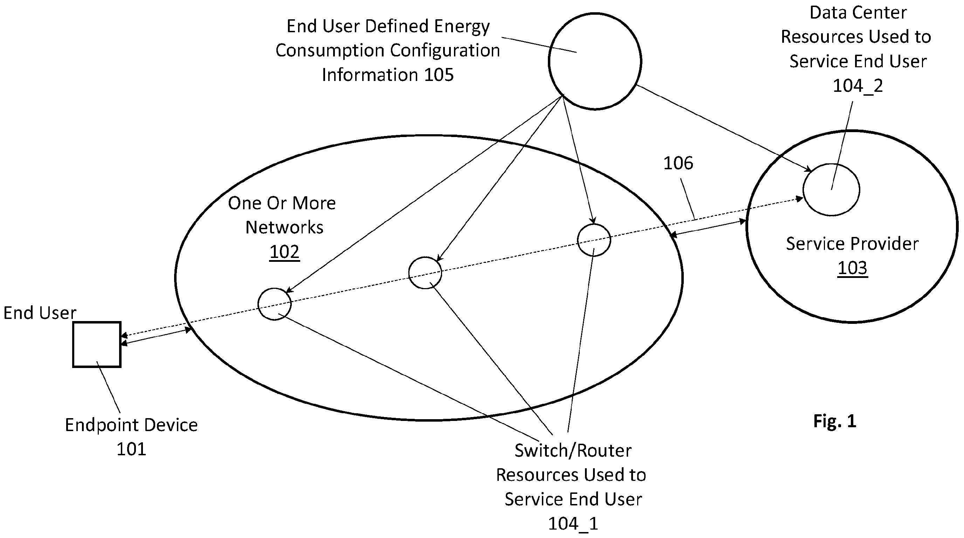

Fig. 1 shows an "end-to-end" electronic service implementation in which an end user is using an endpoint device 101 (e.g., a smartphone, a tablet computer, a laptop computer, a desktop computer, a smart appliance (e.g., a smart TV), etc.) to invoke a service that is provided over one or more networks 102 from a service provider 103. Here, the service provider 103 can be, for example, a cloud service that provides its service from one or more data centers that are separated from the endpoint device 101 by the one or more networks 102.

With the cost of energy and the effects of energy consumption on the environment being concerns to the end user, the implementation of Fig. 1 allows the end user to affect, e.g., with configuration information 105, the amount of energy and/or the types of energy that are consumed by the various electronic components 104_1, 104_2 that are involved in the end user's experience of the service that is provided by the service provider 103.

In the particular example of Fig. 1, the energy configuration information 105 put in place by the end user affects: 1) the energy consumption of various network components 104_1 (e.g., switches/routers) within the one or more networks 102 that separate the endpoint device 101 from the service provider's one or more data centers 103; and, 2) the energy consumption of the service provider's one or more data centers, and/or specific hardware components therein 104_2, that are providing the service to the end user's endpoint device 101.

The end user's energy configuration information 105 (configuration settings) can affect the total amount of energy consumed by any/all of the aforementioned components 104_1, 104_2, and/or, the source of the energy consumed by any/all of the aforementioned components 104_1, 104_2 such as non-renewable energy sources (e.g., fossil fuels such as natural gas, oil, petrol, Diesel, coal), greenhouse gases (GHGs) such as methane, low greenhouse gas emission energy sources ("low GHG", such as many renewable energy sources (e.g., wind, solar, geothermal, etc.)), hydropower, nuclear energy, and/or, stored energy sources (e.g., batteries). The energy configuration can be specified, e.g., in various ways and/or with various units such as energy cost, wattage, CO2 equivalent emission, etc.

Here, for example, during an initial setup or configuration of the service that the service provider is to provide to the endpoint device 101, the end user's configuration settings 105 are fed back (in some form) to the various network 104_1 and/or data center components 104_2 that are used to support the service experienced by the end user.

Here, the user's energy related configuration settings 105 can be part of a "flow" 106 that is defined between the specific data center resources 104_2 that actually provide the service being provided to the user (e.g., an instance of an application software program that executes on a particular CPU thread of a particular CPU core and any/all memory, storage or acceleration resources that are invoked by the application when servicing the user) and/or the routing/switching resources 104_1 of the one or more networks 102 that reside between the user's endpoint device 101 and the cloud service's data center(s) 103.

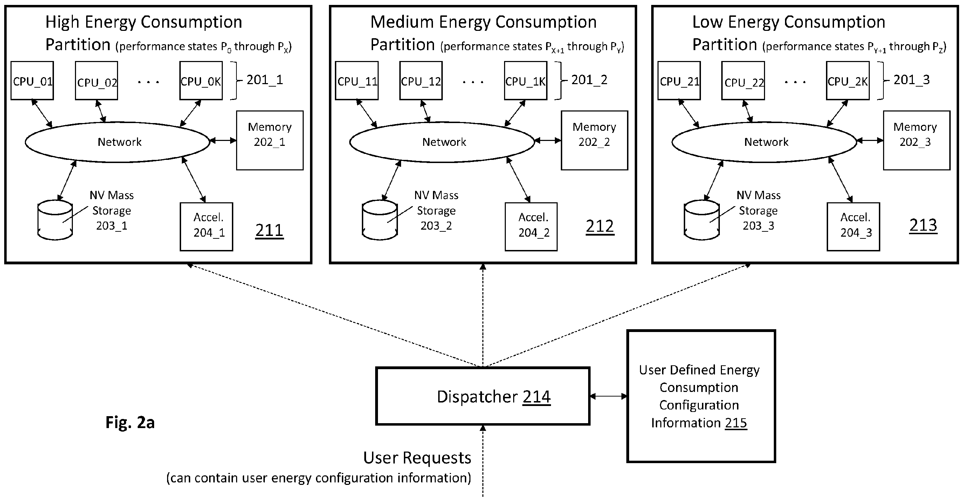

Fig. 2a provides a high level overview of a cloud service's data center design and operation to support user flows having energy consumption definitions determined by a remote end user.

As observed in Fig. 2a, certain computational resources (e.g., CPUs, GPUs), memory resources and storage resources are pre-configured to operate within certain energy consumption ranges. Specifically, CPUs 201_1 are configured to operate in higher energy consumption states, CPUs 201_2 are configured to operate in medium energy consumption states while CPUs 201_3 are configured to operate in lower energy consumption states. Here, as just one possibility, all of CPUs 201_1, 201_2, 201_3 are similarly designed (e.g., share a common instruction set architecture, have a same or similar number of instruction execution pipelines, etc.) and are capable of supporting a number Z of different operational performance states: Po, P₁, P₂, ... P_{Z-1}, Pz (where, e.g., Po corresponds to a highest CPU performance and energy consumption and P_{Z} corresponds to lowest CPU performance and energy consumption).

As part of the operational configuration of the data center, the group of higher energy consumption CPUs 201_1 are configured to operate within a highest range of performance states (e.g., Po through P_{X}), the group of medium energy consumption CPUs 202_2 are configured to operate with a medium range of performance states (e.g., P_{X+1} through P_{Y}, where X < Y) and the group of lower energy consumption CPUs 201_3 are configured to operate within a lower range of performance states (e.g., P_{Y+1} through Pz, where Y < Z). The CPUs 201_1, 201_2, 201_3 can dynamically adjust their performance states depending on their own observed workloads so long as they remain within their pre-allocated performance state range (e.g., CPUs within group 201_1 remain within performance states Po through P_{X}.

Generally, higher CPU performance states correspond to higher CPU clock frequency and/or supply voltage settings whereas lower CPU performance states correspond to lower CPU clock frequency and supply voltage settings. Thus, CPUs in group 201_1 generally pre-configured to operate with higher clock frequencies and/or supply voltages than CPUs in group 201_3.

An alternative configuration is to set a maximum energy consumption ceiling on CPUs within a particular group. For example, setting no maximum for CPUs in group 201_1 (they are allowed to reach performance state Po), a medium energy consumption maximum for CPUs in group 201_2 (e.g., maximum allowed energy consumption corresponds to performance state P_{X+1}) and a low energy consumption maximum for CPUs in group 201_3 (e.g., maximum allowed energy consumption corresponds to performance state P_{Y+1}).

Also as observed in Fig. 2a, the memory resources 202, non-volatile storage resources 203 and accelerator resources 204 that are utilized by the respective groups of CPUs 201 are configured with corresponding performance states.

That is, the memory and storage resources are designed to operate across a range of performance states such that: 1) a first group of memory resources 202_1 that are accessed by the higher energy consumption group of CPUs 201_1 are configured to operate within a range of higher energy consumption performance states; 2) a second group of memory resources 202_2 that are accessed by the medium energy consumption group of CPUs 201_2 are configured to operate within a range of medium energy consumption performance states; and, 3) a third group of memory resources 202_3 that are accessed by the lower energy consumption group of CPUs 201_3 are configured to operate within a range of lower energy consumption performance states. A similar arrangement is pre-configured for the storage 203 and accelerator 204 resources.

Thus, the service provider's data center is partitioned into a higher energy consumption partition 211, a medium energy consumption partition 212 and a lower energy consumption partition 213. A dispatcher 214 that resides at the front end of the data center receives a user request and directs the user request to a particular one of the partitions 211, 212, 213 based on energy consumption configuration information that is embedded within the user request and/or pre-configured data 215 that the service provider maintains for the service provider's users. The data center (and corresponding services) can be any of, e.g., micro data center (to support micro services), a cloud service provider's data center, a data center positioned at/toward the edge of a network service provider's network (e.g., to support edge services, Multi-access Edge Computing (MEC) services, a data center that is coupled with a wireless service provider's base station equipment, etc.), a content delivery network's (CDN's) data center, etc.

In the case of the former (user request specifies user defined energy consumption setting), the dispatcher 214 dynamically analyzes an inbound request and directs the request to a particular one of the partitions 211, 212, 213 that satisfies the user's requested energy consumption setting that was embedded in the request.

In the case of the later (per user energy consumption configuration settings are kept in pre-established data 215), for example, during the user's initial subscription process with the service provider, the user specifies the desired energy consumption (the user can further specify different desired energy consumptions for different services and/or different service conditions (e.g., time of day, day of week, user's type of endpoint device, etc.)). The information is then stored in a database 215 that is coupled to the dispatcher 214. Whenever the user invokes a new service session with the service provider, the dispatcher 214 looks up the user's requested energy consumption configuration (or information that can be used to determine the configuration) based on, e.g., the user's ID and any other applicable conditions that could affect which energy consumption the user requested). The dispatcher 214 then determines an appropriate one of the partitions 211, 212, 213 based on the user's requested energy consumption and sends the request to the partition (alternatively, the database 215 can directly provide the appropriate partition).

Note that the partitions 211, 212, 213 of Fig. 2a can be realized at any/all of a number of different granularities. For example, toward one extreme, the CPUs 201 are implemented as rack mountable CPU compute units or blade servers having multiple multicore processors integrated within a single chassis. At a finer level of granularity, the CPUs 201 are multicore processors. At an even finer level of granularity, the CPUs 201 are CPU processing cores integrated on one or more multicore processors. At an even finer level of granularity, the CPUs 201 are instruction execution pipelines integrated within one or more CPU processing cores that are integrated on one or more multicore processors.

Here, the data center can configure any of the above mentioned CPUs resources with a particular set of clock frequency and/or supply voltage settings thereby setting the CPU's performance state and energy consumption.

The partitioning of the memory 202, storage 203 and accelerator 204 resources can also exhibit varying degrees of granularity. For example, the memory resources 202 of Fig. 2a can be granularized to any of: 1) rack mountable units of memory within a single chassis; 2) groups of memory modules (e.g., dual -in-line memory modules, stacked memory chip modules, etc.)); 3) individual memory modules. The translation lookaside buffer (TLB) contents of any of the CPU resources mentioned above can be configured to cause any particular CPU resource to invoke any particular memory resource. Thus, for example, the TLB entries of the higher energy consumption CPUs 201_1 can target the higher energy consumption memory resources 202_1, the TLB entries of the lower energy consumption CPUs 201_3 can target the lower energy consumption memory resources 202_3, etc.

The storage resources 203 can be partitioned as described just above but where the modules are instead solid state drives and/or hard disk drives. Additionally, many accelerators are multi-core in nature having, e.g., an array of identical logic blocks designed to perform a same set of numerically intensive computations. As such, the accelerator resources 204 can be granularized to various degrees like that as described just above for CPUs.

Additionally, peripheral I/O, internal I/O or other logic blocks that are used to bridge a CPU's requests to a particular storage and/or accelerator resource (not shown in Fig. 2a) can be configured to route the requests of higher energy consumption CPUs 201_1 to higher energy consumption storage 203_1 and/or accelerator resources 204_1, the requests of lower energy consumption CPUs 201_3 to lower energy consumption storage 203_3 and/or accelerator resources 204_3, etc.

Thus, by partitioning the data center's CPU, memory, storage and/or accelerator resources according to energy consumption into groups of coupled like energy consuming components, the data center can effect services with different power consumptions and apply users requests to them consistent with user specified energy consumption preferences.

In another approach, different user requests having different user specific energy consumption levels are executed on a same hardware platform, and, the operations that are performed to satisfy the different user requests are "batch" processed so that the hardware's performance states can be adjusted in between the execution of different batches of program code for different users.

For example, a large set of program code instructions for a first user is loaded in sequence into an instruction queue that feeds a particular processor (or instruction execution pipeline). The processor's/pipeline's performance state is adjusted to a particular combination of clock frequency and supply voltage settings that corresponds to the first user's requested energy consumption. The processor/pipeline is then dedicated to the execution of the first user's large "batch" of program code (e.g., an executes for an extended time period on the first user's program code).

Then, e.g., after the first user request is satisfied (or at least has been substantially processed), a second large set of program code instructions for a second user is loaded in sequence into the same instruction queue that feeds the same particular processor/pipeline. The processor's/pipeline's performance state is adjusted again to another combination of clock frequency and supply voltage settings that corresponds to the second user's requested energy consumption. The processor/pipeline is then dedicated to the execution of the second user's program code.

Here, by servicing requests for different users having different energy requirements in large batches, the time penalty associated with changing performance state (clock and/or supply voltage setting), potentially on a user by user basis, is reduced (e.g., as compared to instruction level parallelism). The large batches can be large sets of program code (as described just above), large batches of data (e.g., few program code instructions are executed but on large amounts of data such as an iterative loop of program code that continually re-executes the same small footprint of instructions but executes the code on different data with a next loop), or both.

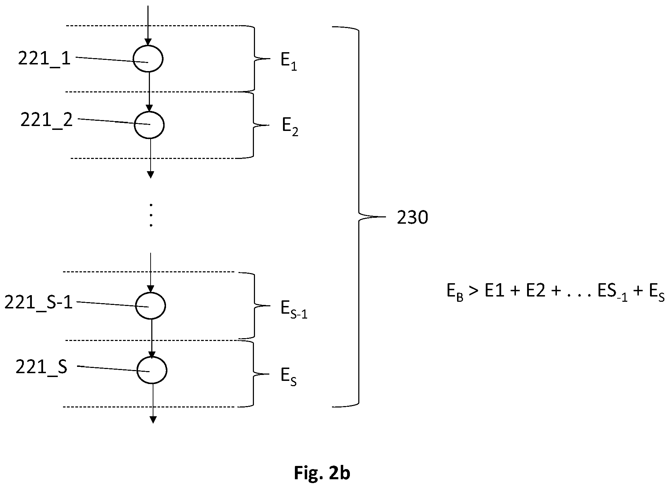

Fig. 2b shows another implementation possibility in which the user request entails the data center performing a number of different methods 221_1 through 221_S, e.g., in sequence. The dispatcher 214 (and/or an orchestrator software program that executes on one or more of the partitions) determines the sequence of methods 221_1 through 221_S that are to be executed in order to satisfy the user's request.

One or more of the methods 221_1 through 221_S have different execution options where the different execution options correspond to different amounts of energy consumption for the same function (the function of the particular method). The dispatcher 214 (or orchestrator) then selects a specific option for different ones of the methods 221_1 through 221_S in a manner that ensures that the total energy consumption of the sequence of methods 221_1 through 221_S remains within an energy budget E_{B} that was specified for the service by the user. As observed in Fig. 2b, methods 221_1 through 221_S has an associated energy consumption E₁, E₂, ... E_{S-1}, Es. The summation of the energies E₁, E₂, ... E_{S-1}, E_{S} result in a total energy that is less than the user specified energy budget E_{B}.

Notably, the different execution options could include execution on different ones of the partitions (e.g., referring to Fig. 2a, for a same method, a first option is to execute the method on the high energy partition 211, a second option is to execute the method on the medium energy partition 212, and a third option is to execute the method on the low energy partition 213). Thus, servicing a user request that is serviced by the execution of a number of different methods can entail executing different ones of the methods on different hardware platforms having different energy consumptions.

Additionally, the different options for a particular method can also include the use of different combinations of hardware components. For example, a first option for a particular method can favor the reading/writing of data from/to mass storage, whereas, a second option for the same method can favor the reading/writing of (e.g., the same) data from/to DRAM memory. The former (mass storage centric) will tend to consume a longer amount of time to complete but consume less energy. The later (DRAM centric) will tend to consume less amount of time to complete but will consume more energy.

As another example, a first option for a particular method entails execution of program code and data out of memory by a CPU processor to perform a specific function, whereas, a section option for the particular method entails having the function performed by an accelerator. The former (execution of program code by a processor out of memory) will tend to consume a longer amount of time to complete and consume more energy. The later (use of an accelerator) will tend to consume less time to complete and consume less energy. Here, for example, the dispatcher/orchestrator can be configured to choose the second option as a default unless there is plenty of "room" in the user specified energy budget in which case the former option is chosen.

Thus, for any particular one of the methods, the dispatcher/orchestrator can select from options that entail execution on different hardware platforms as well as options that entail execution with different hardware component combinations.

Additionally, apart from keeping within a user defined energy budget, the dispatcher/orchestrator can also be designed to ensure that the end-to-end propagation delay through the sequences of methods 221_1 through 221_S is also less than a user defined amount of time. Thus, the dispatcher/orchestrator has to not only select method options that keep the overall service request within a user specified energy budget but also within a user specified propagation delay limit. Here, for example, a service level agreement (SLA) can be established between the user and the service provider that operates the data center. Both the energy budget and propagation delay limit information for a particular user can be kept in a database (like database 215 of Fig. 2a) and used by the dispatcher/orchestrator to combine methods that meet both the energy and propagation delay requirements as specified by the SLA. The service provider can report to the user the actual energy consumption of the method. Notably, SLA pricing can also be based on energy consumption. As such, the user specified energy budgets help establish the pricing the user is charged for the service provider's services.

Information can be kept in a database (like database 215 of Fig. 2a) that identifies the respective method options for a number of methods and the respective energy consumptions and propagation delays for these options. A dispatcher/orchestrator refers to this information when determining which options to use when servicing a particular request 215. Over time, as part of artificial intelligence training or otherwise, the data center can observe the energy consumptions and/or propagation delays of the different method options, and/or combinations of specific method options, to better (more accurately) refine the energy and/or propagation delays of the respective method options and/or combinations of such method options. Thus, the information improves over time based on a historical tracking of the performance of the method options.

Notably, a sequence of methods 221_1 through 221_S used to service a particular user request can be defined as a "process" and unique process ID (e.g., a PASID) is assigned to the process. The dispatcher/orchestrator then builds a data structure that specifies, for the process ID, which respective method option is to be executed for the process's different methods. During runtime, the execution hardware refers to the data structure to understand which method option is to be executed for a particular one of the methods.

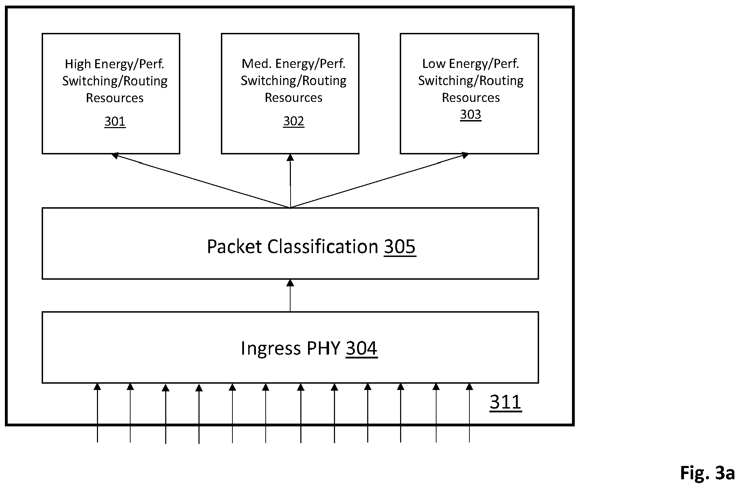

Fig. 3a shows a detailed view of one of the networking router or switches 311 within the one or more networks 102 of Fig. 1 whose switching/routing resources are similarly partitioned into higher energy consumption (and performance) 301, medium energy consumption 302 and lower energy consumption 303 partitions. Here, the logic circuity of the higher energy switching/routing partition 301 can be configured with higher clock frequencies and/or supply voltages, the logic circuity of the medium energy consumption switching/routing partition 302 can be configured with medium clock frequencies and/or supply voltages and the logic circuity of the lower energy consumption switching/routing partition 303 can be configured with lower clock frequencies and/or supply voltages.

The switch/router also includes a ingress physical layer (PHY) plane 304 that receives incoming packets and a packet classification layer 305 that receives the incoming packets from the ingress PHY plane 304. The packet classification layer 305 classifies (e.g. characterizes) the incoming packets including identifying a particular respective preferred energy consumption level for an incoming packet and/or identifying one of the switching/routing partitions 301, 302, 303 to switch/route the packet. The energy consumption classification can be based on, e.g., information in a packet header that explicitly specifies a user defined energy consumption level for the packet, and/or, information in the header of the packet that is used to determine a user defined energy consumption level for the packet. The packet classification stage 305 then forwards the received packet to a correct switching/routing partition 301/302/303 based on the packet's user defined energy consumption level.

In the case of the former (packet headers are explicitly labeled with a user defined energy consumption level), the packet classification stage 305 processes a packet's header and recognizes an energy consumption level identifier within the header. The identifier identifies and/or correlates to a particular one of the switching/routing partitions 301/302/303. Here, the network service provider that operates the switch/router 311 can offer a range of different energy consumption levels (and corresponding network propagation delays) for the different switching/routing partitions 301/302/303.

A user of the network then specifies which energy consumption level is to be used by identifying it in the respective headers of the packets that the user sends into the network. Packets belonging to different flows (e.g., different combinations of source IP address, destination IP address and protocol (and possibly also transport layer source port address and transport layer destination port address)), including different flows for a same user, can be labeled with different energy consumption level identifiers in the flows' corresponding packet headers.

In the case of the later (packet header information implicitly rather than explicitly identifies a packet's user defined energy consumption level), the network service provider's network control function appends a particular respective energy consumption level and/or partition identifier to the flows that the packet classification layer 305 is configured/programmed to process. The packet classification stage 305 identifies the particular flow that a particular inbound packet belongs to and then identifies the correct energy consumption level and/or switching/routing partition 301/302/303 from the flow identification (e.g., one or more packet processing pipeline logic chips identify the packet flow with a first pipeline stage and then a following, second stage of the pipeline uses the flow identifier as a lookup parameter into a programmed table that lists the respective energy consumption level and/or switching/routing partition for the different flows that the packet classification layer 305 is configured to process).

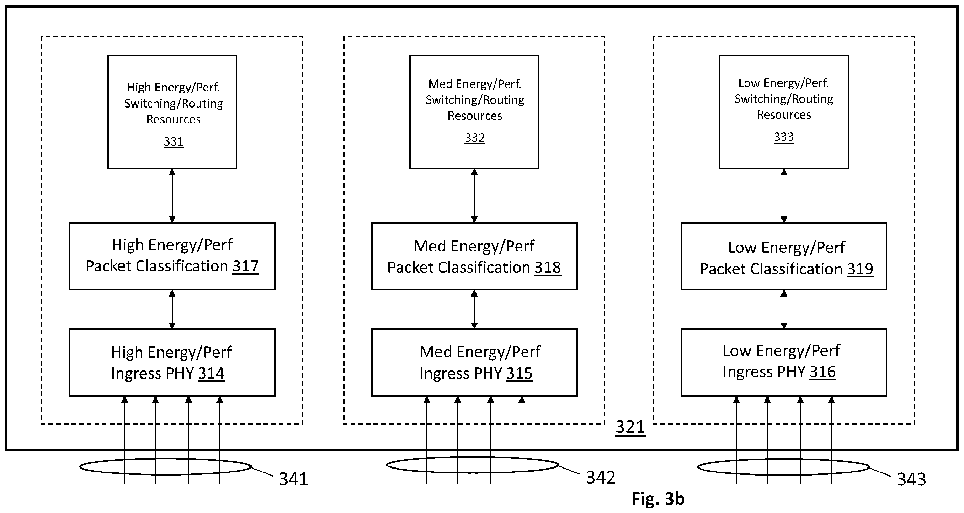

Fig. 3b shows another partitioned architecture for a network router/switch 321 in which the packet classification 317, 318, 319 and ingress PHY layers 314, 315, 316 are also partitioned so that, e.g., higher energy consumption packet classification 317 and higher energy consumption ingress PHY 314 partitions feed the higher energy consumption routing/switching partition 331, medium energy consumption packet classification 318 and medium energy consumption ingress PHY 315 partitions feed the medium energy consumption routing/switching partition 332, lower energy consumption packet classification 319 and lower energy consumption ingress layer 316 partitions feed the lower energy consumption routing/switching partition 333, etc.

Here, higher energy consumption packet classification 317 and ingress PHY 314 partitions can be achieved by applying higher clock frequencies and/or supply voltages to the higher energy consumption packet classification logic circuity and physical layer receive circuitry as compared to the lower energy consumption packet classification and receive physical layer partitions. Notably, to effect different energy consumption ingress PHY layers 314, 315, 316, different inbound line speeds of the respective data links 341, 342, 343 that feed the respective receive physical layer partitions 314, 315, 316 can be implemented (the inbound data links 341 that feed the higher energy consumption ingress PHY partition 314 have higher data rates than the inbound data links 343 that feed the lower energy consumption ingress PHY partition 316).

Note that a network provider can configure its network so that the network's individual switching/routing nodes are internally configured to have different energy consumption partitions as described just above (higher energy traffic flows through the higher energy consumption partitions whereas lower energy traffic flows through the lower consumption partitions). Alternatively, the network provider can partition the network such that, e.g., a first partition includes higher energy consuming switches/routers that are coupled to one another, a second partition includes lower energy consuming switches/routers that are coupled to one another, etc. Higher energy consuming traffic flows as directed through the higher energy consuming network partition while lower energy consuming traffic flows are directed through the lower energy consuming network partition.

Thus, the energy related input information that is used by the switches/routers to determine/effect a particular energy consumption for a particular packet can be implemented on a per-hop basis (e.g., energy input is embedded in packet header and processed at nodes along the route through the network, and/or, according to a circuit connection definition through nodes of the network (e.g., a particular flow). Devices and/or systems that can process and/or use the energy input information can include switches, routers, switch chips, switch and/or router system-on-chip (SOC)s, etc. The network can include one or more local area networks (LANs), wide area networks (WANs), public networks, private networks, networks provided by an Internet Service Provider (ISP), communication service provider (CSP, CoSP), edge nodes, base stations, networks with micro-datacenters, content delivery network (CDN), cybersecurity devices, etc.

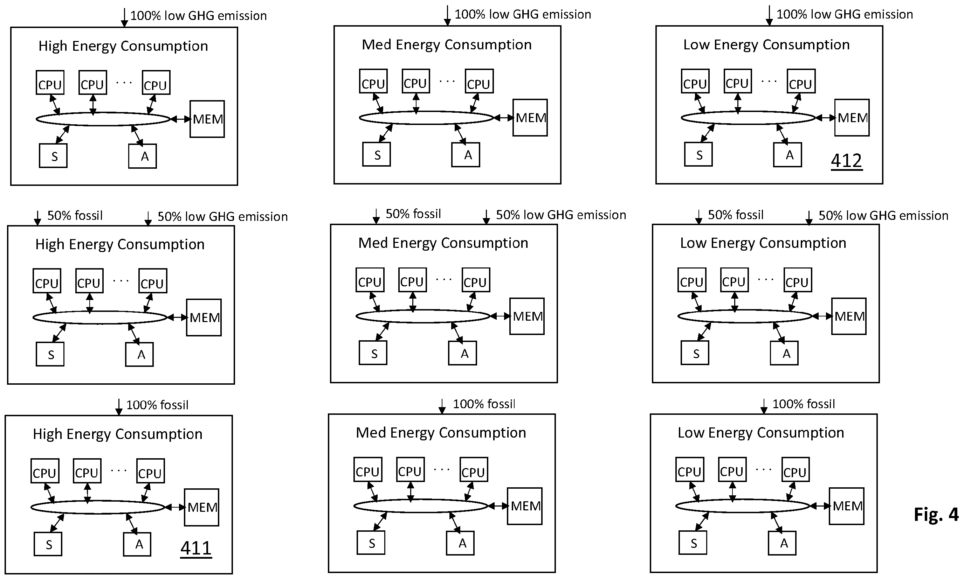

Fig. 4 shows another data center implementation in which the data center processing, memory, accelerator and storage resources are not only partitioned into groups based on energy consumption (e.g., high, medium and low as discussed above with respect to Fig. 2), but are also partitioned into different groups based on the source(s) of the type of energy that supply the different partitions.

Here, as observed in Fig. 4, there exist high, medium and low energy consumption partitions for three different energy source options: 1) 100% fossil fuel supplied (oil, gas); 2) 50% fossil fuel supplied and 50% low greenhouse gas emission supplied ("low GHG"); 3) 4) 100% low GHG.

Here, fossil fuels are a type of nonrenewable energy source in which the supply of the resource depletes over time as it is continually used (the rate at which the energy is used exceeds the rate at which the energy can be generated, which, in the gas of oil or gas can be millions of years). By contrast many low GHG energy sources are renewable (they are more or less continually available/generated). Examples include solar, wind, geo thermal (heat generated from within the earth), hydro power, oceanic, bio energy and nuclear. Low GHG energy sources typically emit carbons only in small amounts (or less). Whether an energy source is a low GHG energy source or not a low GHG energy source can therefore depend on the amount of carbon, carbon monoxide (CO) or carbon dioxide (CO₂) that the energy source emits. CO₂ emissions from both low GH and non-low GHG energy sources can be measured in units of CO₂ where low GHG sources typically emit fewer units of CO₂ and the non-low GHG sources typically emit more units of CO₂. Energy sources can also be measured in their equivalence of CO₂ emissions. Low GHG energy sources can also be characterized as green energy sources.

Stored energy sources can also be viewed as low GHG energy sources even if the energy source(s) that are used to supply the energy storage system with energy are not low GHG sources. Examples of a stored energy source include a battery, a flow-battery, a flywheel, a gravity battery, a thermal battery, a compression battery, a hydrogen energy storage, a phase change energy storage, ultra capacitors, Sabatier process, etc.

Here, the data center is designed to supply the different partitions with the different energy source combinations as described above. Thus, a user can not only specify the degree to which the service provider is to consume energy when providing services to the user (e.g., high, medium or low), but also, can specify an energy source definition that the service provider is to apply when providing services for the user. Thus, for instance, if a first user requests high energy consumption sourced by 100% fossil fuel, the data center will service the first user from partition 411, whereas, if a second user requests low energy consumption sourced by 100% green energy, the data center will service the second user from partition 412. A dispatcher (not shown in Fig. 4) receives an inbound request and comprehends both the user defined energy consumption level and the user defined energy source (either through explicit labeling on the inbound requests or through pre-configured information for the user or user flow, as described above with respect to Fig. 2) and forwards the request to the correct one of the partitions observed in Fig. 4.

A network's switching/routing resources can be similarly further partitioned so that different energy consumption switching/routing energy consumption partitions (a described above with respect to Figs. 3a and 3b) are supplied by different energy source profiles as described just above with respect to Fig. 4.

A user's traffic flows through the network can therefore be directed through network switching/routing partitions having not only a user specified energy consumption level but also a user specified energy source definition. The user's energy source definition can be specified by explicitly identifying it the headers of the packets of the user's traffic flow, and/or, by pre-configuring the packet classification layer(s) with information that correlates the user's flow definition (e.g., source and destination IP addresses, transport layer port source and destination addresses) to a specific energy source definition.

Note that any/all of the energy related information provided by a user to a service provider (e.g., high/med/low, an energy budget, the energy source(s) to be used, etc.) can be more generally viewed as an energy related input that the user sends to the service provider. The service provider can acknowledge the energy related input information back to the user in various ways and/or forms, e.g., as part of the initial configuration of the user with the service provider, as part of the response to a request for a service sent to the service provider by the user, as part of reporting the service provider's performance to the user in view of an SLA between the user and the service provider, invoices sent to the user by the service provider, etc.

The term "user" has been used above (and is used below) to refer to a client of the service provider. As such, a "user" can include a person who is using a client side end device, one or more client side systems (e.g., computers and/or end device(s) and/or any software executed thereon (including but not limited to an application and/or operating system (OS) user interface button/widget/OS that is used to establish/create/send energy related input information to the service provider), or otherwise), and/or, a client side entity (e.g., the IS infrastructure of a corporation or other organization that is a customer of the service provider' services). At least all of these can also be referred to as a sender of a request for the service provider's services.

### Application software defined energy consumption

The above discussion of Fig. 3 described partitioning of a data center's CPU, memory, accelerator and storage resources into groups of like energy consumption (e.g., high, medium, low) so that, e.g., a first request from a first user that prefers higher energy consumption can be dispatched to a higher energy consuming partition, whereas, a second request from a second user that prefers lower energy consumption can be dispatched to a lower energy consuming partition.

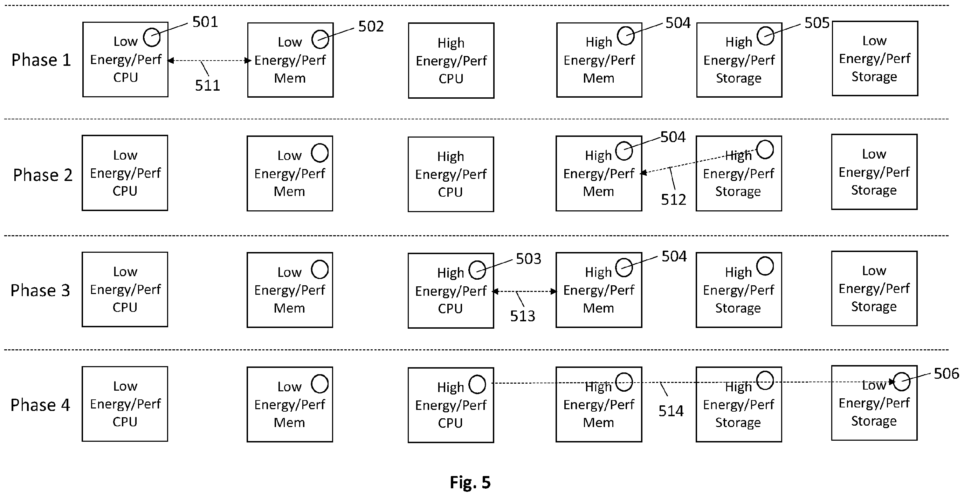

Fig. 5, by contrast, is directed to an approach in which the different underlying hardware components that support an application software program are preconfigured into an appropriate energy consuming state based on that application software program's understood usage of the components pre-runtime.

As will become clear from the following discussion, preconfiguring the underlying hardware components for a particular software application can result in the different ones of the hardware components being configured into different relative energy consumption states rather than like energy consumption states.

Fig. 5 shows a first example for a first application that is deployed to execute in a data center whose various resources are partitioned into different energy consumption states (performance states). In particular, there exist both high energy consuming and low energy consuming CPUs, memory units and storage units. Additionally, the behavior of the application's execution during runtime is understood pre-runtime (e.g., by having previously monitored the telemetry data of hardware used to support the application, by having simulated the application's execution on a hardware platform, etc.).

In particular, the application is understood to have a first, low processing phase ("Phase 1") in which the CPU performs basic orchestration. The application then enters a second phase ("Phase 2") in which the application requests that a large amount of data be loaded from storage into memory. The application then enters a third phase ("Phase 3") in which the application reads large amounts of freshly loaded data from the high energy consumption memory and performs computationally intensive operations on the data. The application then enters a fourth phase ("Phase 4") in which a small resultant that is subsequently used only infrequently is written to a low energy consumption storage.

As such, the application's data and program code are partitioned into different ones of the hardware platform's resources based on the above described understood behavior of the application. Namely, the portion of the application's program code 502 that is executed 501, 511 to perform the initial orchestration 501 is loaded, pre-runtime, onto a low energy consumption memory unit and executes 501, 511 on a low energy consumption CPU. That is, during the first phase, the low energy consumption CPU executes 501, 511 the orchestration related program code 502 from the low energy memory. Here, because the orchestration related program code 502 is simplistic and is not computationally intensive, adequate performance is achieved by executing 501, 511 the orchestration portion 502 of the application from a low energy consumption CPU and memory.

By contrast, for the application's second phase, a high energy consumption storage unit and memory unit are utilized. Here, the first phase terminates with the orchestration program code 502 that is executing 501, 511 on the low energy CPU requesting a large amount of data to be uploaded from storage into a memory unit. Because large amounts of data are to be transferred, the data to be uploaded 505 is initially stored in a high performance storage unit, and, the orchestration program code 502 that executes 501, 511 on the low energy consumption CPU, e.g., issues a direct memory access (DMA) request to an I/O hardware unit (which is also placed in a high energy consumption state, not shown in Fig. 5) to read the data from high energy consuming storage unit and write the data into a high energy consuming memory unit 512.

The application then enters the third phase. For the third phase, the application's computationally intensive program code 504 is configured to execute on a high energy consumption CPU from the high energy consumption memory (the computationally intensive program code 504 is, e.g., loaded on the same high energy consumption memory that the data that from the high energy consumption storage unit is loaded onto). The computationally intensive program code 504 executing 503, 513 on the high energy consuming CPU reads 513 the data from the high energy consuming memory unit and processes 503 the data.

When the computationally intensive program code 504 is finished processing 503, 513 the data and has generated a resultant, the application enters the fourth phase. Here, because the resultant is of small size and is infrequently used, it need not be written into a high or low energy consumption memory. Rather, the resultant 506 is written 514 from the high energy consumption CPU and/or memory to the low energy consumption storage.

Thus, the data center's hardware resources are pre-configured, and the application's program code and data are partitioned and assigned to respective ones of the hardware resources such that lower performance tasks are supported with lower energy consuming components and higher performance tasks are supported with higher energy consuming components. Note that the coupling between any CPU and any memory unit is readily achieved through manipulation of a CPU's TLB entries for a particular application software program. Likewise, coupling between any memory and any storage unit is accomplished by configuring similar information, e.g., within an I/O unit.

Notably, different application software programs can be concurrently executed on the different hardware components observed in Fig. 5 where the respective program code and data for the application software programs is partitioned onto higher or lower energy consuming components according to an application software program's unique phases and usages of the hardware components as described above.

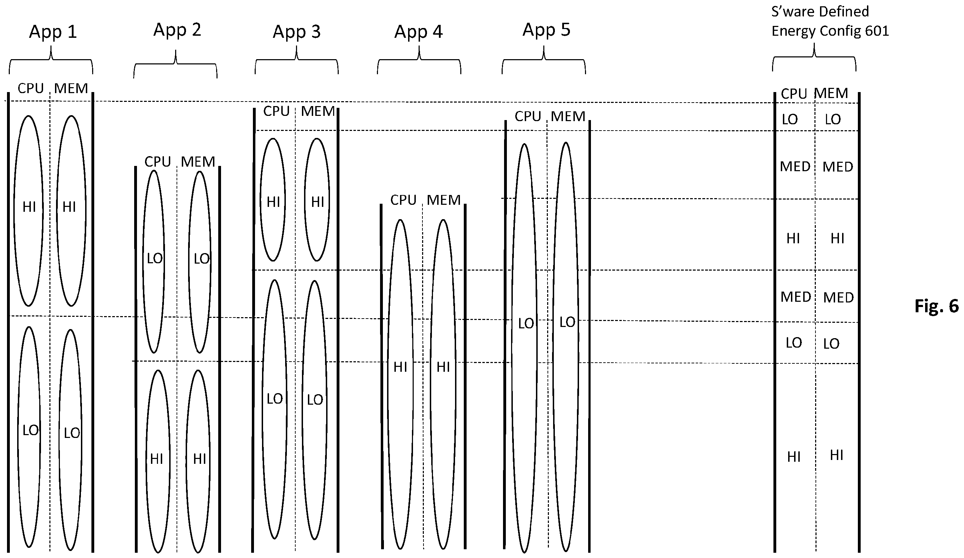

Fig. 6 shows another example in which multiple application software programs are deployed to operate on a single processor and execute out of a single memory. Because a single processor and single memory are being utilized, the partitioning of different portions of program code and data onto different hardware components having different energy consumption is not possible. Instead, the energy consumption of the single processor and single memory is dynamically scaled according to the immediate energy consumption needs of the set of application software programs as a whole.

Here, again, the behavior of a respective application in terms of its usage of processor and memory resources is defined pre-runtime in phases. A particular application, being different from any/all of the other applications, and/or operating on a different data set, can have a unique pre-runtime behavior profile in terms of the time length of the phases and the energy consumption requirements of the processor and the memory. As such, as observed in Fig. 6, a first application ("App_1") has a first pre-runtime defined profile, a second application ("App_2") has a second pre-runtime defined profile, a third application ("App_3") has a third pre-runtime defined profile, a fourth application ("App_4") has a fourth pre-runtime defined profile and a fifth application ("App_5") has a fifth pre-runtime defined profile.

A respective profile outlines its respective application's energy consumption usage of the processor and memory in different phases. Here, for simplicity's sake, a different phase corresponds to a change in the energy consumption of both the processor and the memory. That is, high energy consumption by a processor is assumed for simplicity to cause high energy consumption of a memory. Although this can be common it is frequently not the case (e.g., a processor can generate and process internal operands that remain within the processor's register space resulting in high processor energy consumption but low memory energy consumption). The reader will understand that processor and memory usages and energy consumption need not operate in lock-step. Additionally, Fig. 6 only depicts processor and memory usage. More extensive pre-runtime behavioral energy consumption descriptions can include the usage and energy consumption of other system components such as mass storage and acceleration.

Time extends downward along the vertical axis according to logical machine cycles. The different application software programs start at different times and a software defined energy consumption program 601 processes the behavioral descriptions during run-time according to actual machine cycles of the processor and memory hardware during runtime.

As can be seen in Fig. 6, the software defined energy consumption software 601 dynamically scales the performance states of the processor and the memory in accordance with the collective load on the processor and memory as described by the pre-runtime behavioral descriptions for the set of applications. Specifically, when the software defined energy consumption program 601 recognizes a change in the collective energy consumption of the set of applications, it changes the performance state (and corresponding energy consumption) of the processor and memory.

Note that the pre-runtime defined behavior description for any application can be more complicated than the "strictly serial" descriptions observed in Fig. 5. For example, the behavioral description for any/all of the applications can take the form of a tree where different branches in the program code result in different pre-runtime defined energy consumption profiles depending on which branch is actually taken during runtime.

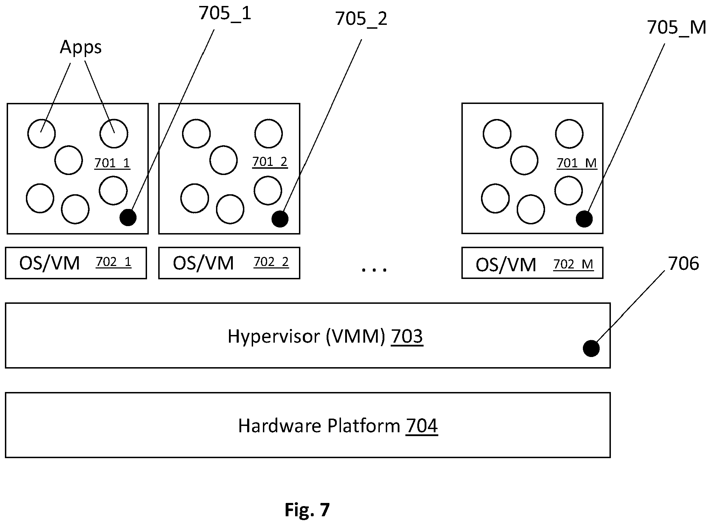

The approach of Fig. 6 can be particularly useful in a data center environment where, as observed in Fig. 7, e.g., groups of applications execute within a same container and multiple containers 701_1, 701_2, ... 701_M containers execute on its own respective operating system (OS) and virtual machine 702_1, 702_2, ... 702_M. The OS and virtual machines, in turn, execute on a hyper visor (virtual machine monitor) 703 that actually determines the usage of the underlying hardware platform 704 (e.g., the processor and memory in Fig. 6). Here, the software defined energy consumption program 601 of Fig. 6 can have different portions that operate at different levels of the hierarchy observed in Fig. 7 to collectively determine the load being placed on the hardware 704 and configure the hardware 704 with the appropriate performance state(s) (energy consumption(s)).

As just one example, the application software programs of Fig. 6 can correspond to the set of applications with a same container. Thus, there is a different respective instance 705_1, 705_2, ... 705_M of the software defined energy consumption program for the different containers 701_1, 701_2, ... 701_M.

A deeper (hypervisor) component 706 of the software defined energy consumption program processes the collective outputs of the higher (container) level software defined energy consumption programs 705_1, 705_2, ... 705_M and executes a similar process as observed in Fig. 6 to determine the appropriate runtime performance state configurations for the hardware 704 (e.g., for the lower level component 706, the different application behaviors in Fig. 6 instead correspond to the different collective loads from the different containers, the collective demand of which determines the actual hardware power configurations).

The teachings of Figs. 2a,b through Fig. 4 can be combined with the teachings of Figs. 5 through 7 to form combined solutions that entail keeping the energy consumption of a user request within a user defined energy budget and/or energy source profile, where, the hardware components used to execute the user request and/or the performance states of the hardware components used to execute the user request are pre-determined in software.

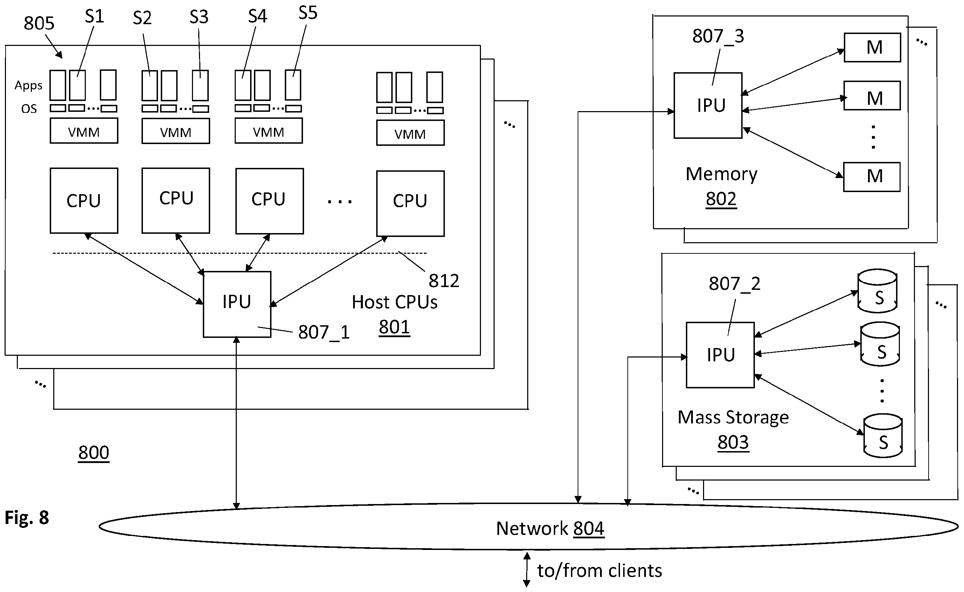

Fig. 8 shows a new, emerging data center environment in which "infrastructure" tasks are offloaded from traditional general purpose "host" CPUs (where application software programs are executed) to an infrastructure processing unit (IPU), edge processing unit (EPU), or data processing unit (DPU) any/all of which are hereafter referred to as an IPU.

Networked based computer services, such as those provided by cloud services and/or large enterprise data centers, commonly execute application software programs for remote clients. Here, the application software programs typically execute a specific (e.g., "business") end-function (e.g., customer servicing, purchasing, supply-chain management, email, etc.). Remote clients invoke/use these applications through temporary network sessions/connections that are established by the data center between the clients and the applications. A recent trend is to strip down the functionality of at least some of the applications into more finer grained, atomic functions ("micro-services") that are called by client programs as needed. Micro-services typically strive to charge the client/customers based on their actual usage (function call invocations) of a micro-service application.

In order to support the network sessions and/or the applications' functionality, however, certain underlying computationally intensive and/or trafficking intensive functions ("infrastructure" functions) are performed.

Examples of infrastructure functions include routing layer functions (e.g., IP routing), transport layer protocol functions (e.g., TCP), encryption/decryption for secure network connections, compression/decompression for smaller footprint data storage and/or network communications, virtual networking between clients and applications and/or between applications, packet processing, ingress/egress queuing of the networking traffic between clients and applications and/or between applications, ingress/egress queueing of the command/response traffic between the applications and mass storage devices, error checking (including checksum calculations to ensure data integrity), distributed computing remote memory access functions, etc.

Traditionally, these infrastructure functions have been performed by the CPU units "beneath" their end-function applications. However, the intensity of the infrastructure functions has begun to affect the ability of the CPUs to perform their end-function applications in a timely manner relative to the expectations of the clients, and/or, perform their end-functions in a power efficient manner relative to the expectations of data center operators.

As such, as observed in Fig. 8, the infrastructure functions are being migrated to an infrastructure processing unit (IPU) 807. Fig. 8 depicts an exemplary data center environment 800 that integrates IPUs 807 to offload infrastructure functions from the host CPUs 801 as described above.

As observed in Fig. 8, the exemplary data center environment 800 includes pools 801 of CPU units that execute the end-function application software programs 805 that are typically invoked by remotely calling clients. The data center also includes separate memory pools 802 and mass storage pools 803 to assist the executing applications. The CPU, memory storage and mass storage pools 801, 802, 803 are respectively coupled by one or more networks 804.

Notably, a respective pool 801, 802, 803 has an IPU 807_1, 807_2, 807_3 on its front end or network side. Here, a respective IPU 807 performs pre-configured infrastructure functions on the inbound (request) packets it receives from the network 804 before delivering the requests to its respective pool's end function (e.g., executing application software in the case of the CPU pool 801, memory in the case of memory pool 802 and storage in the case of mass storage pool 803).

As the end functions send certain communications into the network 804, the IPU 807 performs pre-configured infrastructure functions on the outbound communications before transmitting them into the network 804. The communication 812 between the IPU 807_1 and the CPUs in the CPU pool 801 can transpire through a network (e.g., a multi-nodal hop Ethernet network) and/or more direct channels (e.g., point-to-point links) such as Compute Express Link (CXL), Advanced Extensible Interface (AXI), Open Coherent Accelerator Processor Interface (OpenCAPI), Gen-Z, etc.

Depending on implementation, one or more CPU pools 801, memory pools 802, mass storage pools 803 and network 804 can exist within a single chassis, e.g., as a traditional rack mounted computing system (e.g., server computer). In a disaggregated computing system implementation, one or more CPU pools 801, memory pools 802, and mass storage pools 803 are separate rack mountable units (e.g., rack mountable CPU units, rack mountable memory units (M), rack mountable mass storage units (S).

In various embodiments, the software platform on which the applications 805 are executed include a virtual machine monitor (VMM), or hypervisor, that instantiates multiple virtual machines (VMs). Operating system (OS) instances respectively execute on the VMs and the applications execute on the OS instances. Alternatively or combined, container engines (e.g., Kubernetes container engines) respectively execute on the OS instances. The container engines provide virtualized OS instances and containers respectively execute on the virtualized OS instances. The containers provide isolated execution environment for a suite of applications which can include applications for micro-services.

Notably, as Fig. 8 depicts "layers" of pools of a same resource (e.g., layers of CPU pools, layers of memory pools, etc.), a respective layer as depicted in Fig. 8 can correspond to a partition (or section of a partition) having a particular energy consumption (e.g., high, medium or low) as discussed above with respect to Fig. 3. Notably, the partitions (or partition sections) as observed in Fig. 8 include a respective IPU 807. A respective IPU 807 can therefore be configured to consume power in accordance with its partition (or partition section) (e.g., high, medium, low). Similarly, the software defined energy consumption approaches described above with respect to Figs. 5 and 6 can likewise be extended to include an IPU in the collection of hardware components used by the application.

The dispatcher 214 of Fig. 2 can be implemented with an architecture as observed in Fig. 8. Such a dispatcher could be configured to dispatch requests to the data center's request handling resources which are also implemented with an architecture as observed in Fig. 8. Likewise, orchestrator software can execute within one or more CPU pools as application software, and/or, have its own dedicated hardware resources which are implemented as observed in Fig. 8. Note that in various embodiments both a dispatcher and an orchestrator can be used to support a single user request. For example, the dispatcher sends a request to a particular hardware platform and the orchestrator determines which respective options are to be executed for the different methods to remain within a user's specified energy budget. Other cooperative combinations between a dispatcher and orchestrator are also possible.

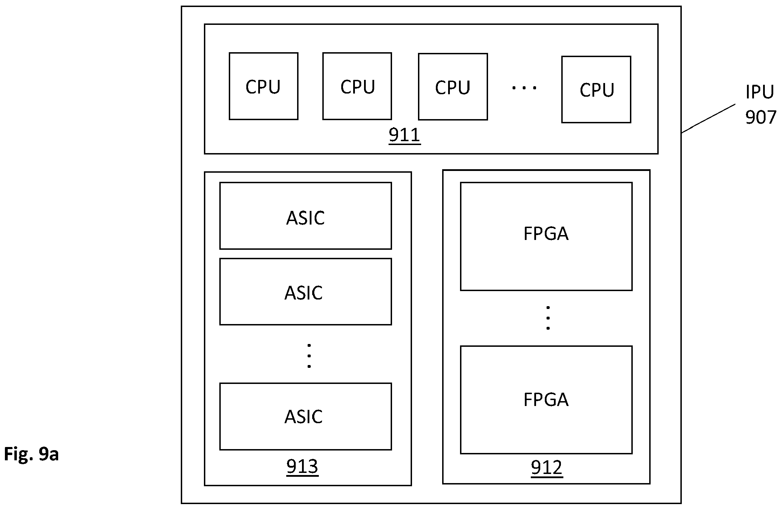

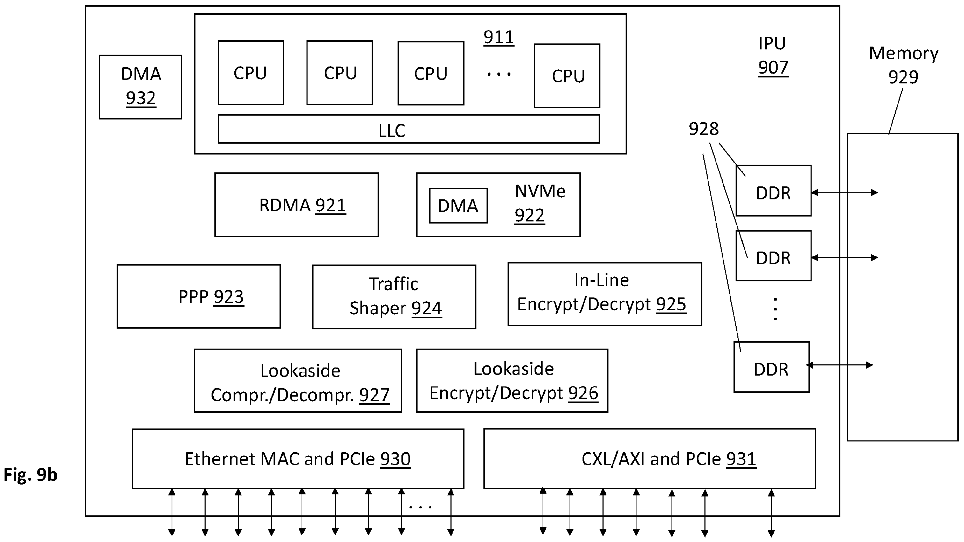

Fig. 9a shows an exemplary IPU 907. As observed in Fig. 9 the IPU 907 includes a plurality of general purpose processing cores 911, one or more field programmable gate arrays (FPGAs) 912, and/or, one or more acceleration hardware (ASIC) blocks 913. An IPU typically has at least one associated machine readable medium to store software that is to execute on the processing cores 911 and firmware to program the FPGAs (if present) so that the processing cores 911 and FPGAs 912 (if present) can perform their intended functions.

The IPU 907 can be implemented with: 1) e.g., a single silicon chip that integrates any/all of cores 911, FPGAs 912, ASIC blocks 913 on the same chip; 2) a single silicon chip package that integrates any/all of cores 911, FPGAs 912, ASIC blocks 913 on more than chip within the chip package; and/or, 3) e.g., a rack mountable system having multiple semiconductor chip packages mounted on a printed circuit board (PCB) where any/all of cores 911, FPGAs 912, ASIC blocks 913 are integrated on the respective semiconductor chips within the multiple chip packages.

The processing cores 911, FPGAs 912 and ASIC blocks 913 represent different tradeoffs between versatility/programmability, computational performance, and power consumption. Generally, a task can be performed faster in an ASIC block and with minimal power consumption, however, an ASIC block is a fixed function unit that can only perform the functions its electronic circuitry has been specifically designed to perform.

The general purpose processing cores 911, by contrast, will perform their tasks slower and with more power consumption but can be programmed to perform a wide variety of different functions (via the execution of software programs). Here, the general purpose processing cores can be complex instruction set (CISC) or reduced instruction set (RISC) CPUs or a combination of CISC and RISC processors.

The FPGA(s) 912 provide for more programming capability than an ASIC block but less programming capability than the general purpose cores 911, while, at the same time, providing for more processing performance capability than the general purpose cores 911 but less than processing performing capability than an ASIC block.

Fig. 9b shows a more specific embodiment of an IPU 907. The particular IPU 907 of Fig. 9b does not include any FPGA blocks. As observed in Fig. 9b the IPU 907 includes a plurality of general purpose cores 911 and a last level caching layer for the general purpose cores 911. The IPU 907 also includes a number of hardware ASIC acceleration blocks including: 1) an RDMA acceleration ASIC block 921 that performs RDMA protocol operations in hardware; 2) an NVMe acceleration ASIC block 922 that performs NVMe protocol operations in hardware; 3) a packet processing pipeline ASIC block 923 that parses ingress packet header content, e.g., to assign flows to the ingress packets, perform network address translation, etc.; 4) a traffic shaper 924 to assign ingress packets to appropriate queues for subsequent processing by the IPU 907; 5) an in-line cryptographic ASIC block 925 that performs decryption on ingress packets and encryption on egress packets; 6) a lookaside cryptographic ASIC block 926 that performs encryption/decryption on blocks of data, e.g., as requested by a host CPU 801; 7) a lookaside compression ASIC block 927 that performs compression/decompression on blocks of data, e.g., as requested by a host CPU 801; 8) checksum/cyclic-redundancy-check (CRC) calculations (e.g., for NVMe/TCP data digests and/or NVMe DIF/DIX data integrity); 9) thread local storage (TLS) processes; etc.

So constructed/configured, the IPU can be used to perform routing functions between endpoints within a same pool (e.g., between different host CPUs within CPU pool 801) and/or routing within the network 804. In the case of the latter, the boundary between the network 804 and the IPU's pool can reside within the IPU, and/or, the IPU is deemed a gateway edge of the network 804.

The IPU 907 also includes multiple memory channel interfaces 928 to couple to external memory 929 that is used to store instructions for the general purpose cores 911 and input/output data for the IPU cores 911 and ASIC blocks 921 - 926. The IPU includes multiple PCIe physical interfaces and an Ethernet Media Access Control block 930, and/or more direct channel interfaces (e.g., CXL and or AXI over PCIe) 931, to support communication to/from the IPU 907. The IPU 907 also includes a DMA ASIC block 932 to effect direct memory access transfers with, e.g., a memory pool 802, local memory of the host CPUs in a CPU pool 801, etc. As mentioned above, the IPU 907 can be a semiconductor chip, a plurality of semiconductor chips integrated within a same chip package, a plurality of semiconductor chips integrated in multiple chip packages integrated on a same module or card, etc.

Embodiments of the invention may include various processes as set forth above. The processes may be embodied in program code (e.g., machine-executable instructions). The program code, when processed, causes a general-purpose or special-purpose processor to perform the program code's processes. Alternatively, these processes may be performed by specific/custom hardware components that contain hard wired interconnected logic circuitry (e.g., application specific integrated circuit (ASIC) logic circuitry) or programmable logic circuitry (e.g., field programmable gate array (FPGA) logic circuitry, programmable logic device (PLD) logic circuitry) for performing the processes, or by any combination of program code and logic circuitry.

Elements of the present invention may also be provided as a machine-readable storage medium for storing the program code. The machine-readable medium can include, but is not limited to, floppy diskettes, optical disks, CD-ROMs, and magneto-optical disks, FLASH memory, ROMs, RAMs, EPROMs, EEPROMs, magnetic or optical cards or other type of media/machine-readable medium suitable for storing electronic instructions.

In the foregoing specification, the invention has been described with reference to specific exemplary embodiments thereof. It will, however, be evident that various modifications and changes may be made thereto without departing from the broader spirit and scope of the invention as set forth in the appended claims. The specification and drawings are, accordingly, to be regarded in an illustrative rather than a restrictive sense.

## Claims

1. An apparatus, comprising:
means for receiving a request;
means for allocating and/or configuring hardware to execute the request in accordance with an energy related input specified by a sender of the request; and,
means for causing execution of the request in accordance with the energy related input.

2. The apparatus of claim 1 wherein the energy related input is embedded within the request.

3. The apparatus of claim 1 further comprising means for performing the allocating and/or configuring at least in part in view of historical results.

4. The apparatus of claim 1, 2 or 3 further comprising means for executing the request on one or more hardware platforms comprising respective hardware components configured to operate within a range of performance states that correspond to the energy related input.

5. The apparatus of claim 1, 2, 3 or 4 further comprising means for determining one or more sources for the energy to be consumed when executing the request, the one or more sources determined at least in part from the energy related input.

6. The apparatus of claim 5 wherein the one or more sources comprise:
oil;
coal;
methane;
petrol;
Diesel;
wind;
solar;
a hydropower source;
a nuclear power source; and/or
retrieval from energy storage.

7. The apparatus of claims 1, 2, 3, 4, 5 or 6 further comprising means for providing a service to the sender over a network having routers and/or switches configured to consume energy in accordance with a network energy consumption input specified by the sender.

8. An apparatus, comprising:
means for sending, to a service provider, an energy related input and a request, wherein, the energy related input is to affect the service provider's consumption of energy when executing the request; and,
means for receiving, from the service provider, information that acknowledges the energy related input and a response to the request.

9. The apparatus of claim 8 wherein the energy related input is embedded within the request.

10. The apparatus of claim 8 further comprising means for sending the energy related input to the service provider before the request is sent to the service provider.

11. The apparatus of claim 10 wherein the energy related input is part of a service level agreement established with the service provider.

12. The apparatus of claim 8 wherein the energy related input articulates if any green energy is to be consumed by the service provider when executing the request.

13. The apparatus of claim 8 wherein the energy related input affects an amount of green energy consumed by the service provider when executing the request.

14. A data center, comprising the subject matter of any of claims 1 through 7.

15. The data center of claim 14 further comprising a machine readable storage medium containing program code that when processed by one or more processors of the data center causes a method to be performed, the method comprising:
determining energy consumption behavior of different hardware components in response to the different hardware components supporting execution of a software application, the determining performed before execution of the software application; and,
using the determined energy consumption behavior to establish respective energy consumptions of the different hardware components during execution of the software application.
